# DEMANDE DE BREVET EUROPEEN

(11) **EP 2 827 427 A1**
(43) Date de publication de la demande: **21.01.2015**
(21) Numéro de dépôt: 14177009.9
(22) Date de dépôt: 15.07.2014
(51) Int. Cl.: H01M 8/04

(54) **Système électrochimique comportant un système de chauffage à induction**

(30) Priorité: 16.07.2013 FR 1356987
(71) Demandeur: Commissariat à l'Énergie Atomique et aux Énergies Alternatives, 75015 Paris (FR)
(72) Inventeur: Buzon, Didier, 38000 GRENOBLE (FR); Oriol, Jean, 94420 LE PLESSIS-TREVISE (FR)
(74) Mandataire: Brevalex

(57) **Abrégé**

Système électrochimique comportant une pile à combustible comprenant empilement (2) de cellules électrochimiques connectées électriquement entre elles par des plaques bipolaires (A, B, C) interposées entre deux cellules électrochimiques successives de l'empilement, ledit empilement (2) étant disposé entre deux plaques terminales (4), ledit empilement s'étendant suivant un axe longitudinal (Z), ledit système électrochimique comportant des moyens d'alimentation des cellules en fluide réactifs, des moyens de circulation d'un fluide caloporteur à travers l'empilement et au moins un système de chauffage par induction comportant une paire d'inducteurs en regard d'une face latérale de l'empilement, le courant circulant dans le deux inducteurs circulant dans des sens opposés.

## Description

### DOMAINE TECHNIQUE ET ART ANTÉRIEUR

La présente invention se rapporte à un système électrochimique comportant un système de chauffage à induction, en particulier une pile à combustible, notamment pour des applications embarquées.

Les piles à combustible et en particulier les piles à combustibles à membrane d'échange de protons les piles ou PEMFC (Proton Exchange Membrane Fuel Cell) sont des générateurs électriques qui transforment une énergie de type électrochimique (hydrogène et oxygène) en énergie électrique et en eau.

Elles comportent un ou plusieurs empilements de cellules électrochimiques. Chaque cellule élémentaire est constituée d'un AME (Assemblage Membrane Electrode) et de deux plaques conductrices collectrices de courant électrique. Au sein d'un assemblage, les cellules sont connectées en série directement par mise en commun des plaques collectrice de deux cellules successives. D'un point de vue pratique, l'assemblage de deux plaques collectrices de deux cellules successives peut être réalisé par différents procédés qui dépendent de la nature des plaques collectrices utilisées. L'assemblage de deux plaques collectrices successives et réalisé par un élément nommé « Plaque bipolaire ». L'empilement est reçu entre deux plaques terminales assurant le maintien mécanique de l'empilement et pouvant intégrer également les canaux de gestion des fluides comburants, carburant et fluide caloporteur.

Dans le cas des PEMFC, les cellules sont formées d'une anode, d'une cathode et d'une membrane d'échange de protons interposée entre l'anode et la cathode.

De manière à optimiser les performances de la pile, les gaz réactifs (comburant et carburant) sont en général distribués grâce à des réseaux de canaux de distribution de part et d'autre de la membrane, directement formés au sein des plaques bipolaires. En fonctionnement, de manière à garantir une homogénéité en température de l'empilement, celui-ci est refroidi par la circulation d'un fluide caloporteur dont les canaux de distribution sont directement intégrés au sein des plaques bipolaires.

En fonctionnement, il est important de bien maitriser l'homogénéité spatiale des gaz réactifs présents au sein de la pile à combustible pour éviter une dégradation accélérée de celle-ci, par exemple, au démarrage il est important de limiter la coexistence d'un front de diffusion H2/O2 du côté anodique au moment de la première pénétration de l'hydrogène à l'anode si de l'oxygène est déjà présent côté cathodique.

En outre, à ce jour, une pile à combustible de type PEMFC fonctionne de manière nominale à des températures comprises entre 65°C et 85°C mais peut fonctionner à des températures inférieures avec des performances moindres. Cette capacité de démarrage à faible température est utilisée pour le démarrage de la pile à combustible, en particulier lorsqu'elle est utilisée dans un véhicule automobile. Une fois la pile activée, la chaleur générée au sein de celle-ci par la réaction électrochimique suffit à élever rapidement la température de l'empilement jusqu'à atteindre la température de fonctionnement nominal.

Or, à basse température, l'eau pure contenue dans la pile (au sein des membranes et dans les canaux de distribution anodiques et cathodiques) se solidifie dés que la température est inférieure au point de solidification au sein du milieu considéré. La présence d'eau gelée dans les canaux peut obstruer une partie des sites actifs et des canaux de distribution de gaz. Cette obstruction induit une répartition non homogène des gaz réactifs au sein de la pile à combustible. Ceci peut provoquer une dégradation des performances et de la durée de vie des cellules électrochimiques. En outre, l'apparition de l'eau gelée peut provoquer des contraintes mécaniques.

Il est donc souhaitable d'éviter la présence d'eau gelée avant le démarrage de la pile.

Des systèmes ont été proposés pour réchauffer la pile et/ou maintenir sa température.

Le document US20120118878 prévoit de réchauffer le liquide fluide caloporteur dans un réservoir distinct de l'empilement de cellules au moyen d'un système de chauffage par induction. Pour réchauffer l'empilement, il faut réchauffer tous les éléments du circuit de refroidissement. La capacité calorifique et la surface d'échange avec l'environnement du circuit de refroidissement sont significatives par rapport à l'empilement. Il en résulte une grande quantité de chaleur à générer.

Le document CA2368891 décrit une pile à combustible comportant un empilement de cellules dans lesquelles les membranes intègrent un fil résistif chauffant. D'une part un tel système requiert le développement de membranes spécifiques et d'autre part les connexions d'alimentation des fils résistifs peuvent être problématiques.

Le document US20050058865 décrit un empilement de cellules à membrane échange de protons intégrant des résistances de chauffage en contact thermique avec les cellules situées aux extrémités de l'empilement. Cette solution n'est pertinente que pour réchauffer les cellules situées en extrémités d'empilement. En effet, le maintien en température ou le chauffage d'un empilement PEMFC par un tel procédé est extrêmement long si on prend en compte la température maximale à laquelle peuvent être élevées les cellules situées aux extrémités.

### EXPOSÉ DE L'INVENTION

C'est par conséquent un but de la présente invention d'offrir un système électrochimique comportant un empilement de cellules électrochimiques, et des moyens de chauffage adaptés à assurer un démarrage du système électrochimique dans des conditions améliorées.

Le but de la présente invention est atteint par un système électrochimique comportant au moins un empilement de cellules et un système de chauffage par induction configuré de sorte que les plaques d'interconnexion forment l'élément chauffant du système de chauffage par induction. Un démarrage rapide du système peut être alors assuré et également son maintien en température. Les plaques d'interconnexion situées au sein de l'empilement sont des plaques bipolaires et celles situées aux extrémités sont désignés "plaques bipolaires d'extrémité".

En d'autres termes, le système de chauffage par induction comporte au moins un inducteur disposé de sorte que le champ magnétique qu'il génère induise un courant dans une ou plusieurs plaques d'interconnexion de l'empilement. Ainsi la chaleur est générée directement au sein de l'empilement, il n'y a pas de perte thermique. Les plaques d'interconnexion ayant généralement une épaisseur très faible, le volume à chauffer est réduit. La mise en mode opérationnel du dispositif électrochimique peut alors être rapide et nécessiter très peu d'énergie.

Le système de chauffage étant activé avant la mise en route de la pile, le système de chauffage, en particulier le champ magnétique généré, ne perturbe pas la pile pendant son fonctionnement.

Dans un mode de réalisation, l'inducteur est coaxial à l'empilement. Ce mode de réalisation présentant l'avantage d'offrir un chauffage homogène.

Dans un autre mode de réalisation, au moins un inducteur est perpendiculaire à l'axe de l'empilement et en regard d'au moins une face de l'empilement. De préférence, plusieurs inducteurs d'axes parallèles sont mis en oeuvre pour couvrir tout ou partie de la surface latérale de l'empilement.

Des inducteurs peuvent être utilisés, par exemple pour chauffer plus particulièrement les plaques bipolaires d'extrémité, le courant induit apparaissant dans les plaques terminales et/ou dans les plaques bipolaires des cellules monopolaires situées en extrémité d'empilement.

La présente invention a alors pour objet un système électrochimique comportant au moins un dispositif électrochimique comprenant un empilement de cellules électrochimiques connectées électriquement entre elles par des plaques bipolaires interposées entre deux cellules électrochimiques successives de l'empilement, le empilement étant disposé entre deux plaques terminales, le empilement s'étendant suivant un axe, le système électrochimique comportant des moyens d'alimentation des cellules en fluide réactifs, des moyens de circulation d'un fluide caloporteur à travers l'empilement et au moins un système de chauffage par induction comportant au moins un inducteur, caractérisé en ce que ledit inducteur est agencé par rapport à l'empilement de sorte à provoquer l'apparition d'un courant induit dans au moins une plaque bipolaire, générant l'échauffement de ladite plaque bipolaire par effet Joule.

Dans un mode de réalisation, l'axe de l'inducteur, est coaxial à l'empilement, l'inducteur étant désigné premier inducteur.

Le premier inducteur peut être disposé autour de l'empilement de manière sensiblement coaxiale à l'empilement

Le premier inducteur peut s'étend sur toute la hauteur de l'empilement.

Dans un autre mode de réalisation, l'axe de l'inducteur est sensiblement perpendiculaire à l'axe de l'empilement, dit deuxième inducteur.

Le deuxième inducteur peut être disposé en regard d'au moins une face latérale de l'empilement.

Le système électrochimique peut comporter au moins deux deuxièmes inducteurs en regard d'au moins une même face latérale, le courant circulant dans l'un des inducteurs ayant un sens opposé à celui du courant circulant dans l'autre des inducteurs. L'empilement peut présenter une section transversale polygonale, le deuxième ou les deuxièmes inducteurs étant conformés pour être en regard d'au moins deux faces latérales.

Le ou les inducteurs sont de préférence montés sur une plaque support fixée sur au moins une plaque terminale.

Au moins un deuxième inducteur peut être disposé autour ou à proximité d'une plaque terminale.

Le premier inducteur peut être est monté sur au moins une plaque terminale sur sa face opposée à celle orientée vers l'empilement.

Le système électrochimique peut avantageusement comporter une source d'alimentation en courant alternatif et un onduleur.

Dans le cas où le dispositif électrochimique comporte plusieurs empilements, ledit système de chauffage peut échauffer au moins un empilement.

Le dispositif électrochimique peut être une pile à combustible, par exemple de type PEMFC.

La présente invention a également pour objet un procédé de fonctionnement du système électrochimique selon la présente invention, comportant les étapes:
- activation du système de chauffage par induction en dehors d'une phase de fonctionnement du dispositif électrochimique,
- échauffement de l'empilement par génération d'un courant induit dans au moins une plaque de connexion,
- arrêt du système de chauffage,
- démarrage du dispositif électrochimique.

Dans un exemple de fonctionnement, le système de chauffage peut être activé après une phase d'arrêt prolongé du dispositif électrochimique et dans lequel le système de chauffage est arrêté lorsque la température au sein de l'empilement est supérieure à la température de fusion de l'eau au sein du générateur électrochimique.

Dans un autre exemple de fonctionnement, le système de chauffage est activé lors d'un arrêt de courte durée du dispositif électrochimique de sorte à maintenir en température l'empilement du dispositif électrochimique.

Le courant alternatif peut présenter une fréquence variable.

Avantageusement, une circulation de fluide caloporteur a lieu pendant la phase de chauffage.

### BRÈVE DESCRIPTION DES DESSINS

La présente invention sera mieux comprise à l'aide de la description qui va suivre et des dessins en annexes sur lesquels :
- la figure 1 est une vue en perspective d'un mode de réalisation d'un système électrochimique et de son système de chauffage direct représenté de manière schématique,
- la figure 2 est une vue en perspective d'un inducteur pouvant être mis en oeuvre dans le mode de réalisation de la figure 1,
- la figure 3 est une vue en perspective d'un autre inducteur pouvant être mis en oeuvre dans le mode de réalisation de la figure 1,
- la figure 4 est une vue en perspective d'un autre mode de réalisation d'un système électrochimique et de son système de chauffage direct représenté de manière schématique,
- la figure 5 est une vue en perspective d'un autre exemple d'inducteurs pouvant être mis en oeuvre dans le mode de réalisation de la figure 4
- la figure 6 est une vue en perspective d'un autre inducteur pouvant être mis en oeuvre dans le mode de réalisation de la figure 4,
- les figures 7A à 7C sont des représentations graphiques de la variation de la densité de courante induite en A/m² dans les plaque bipolaires en fonction de la distance par rapport à l'axe de l'empilement en mm pour des densités de courant et/ou fréquences différentes dans le cas du mode de réalisation de la figure 1 avec uniquement un inducteur 12 coaxial à l'empilement, les plaques bipolaires étant en métal,
- la figure 7D est une représentation graphique de la variation de la densité de courant induite, en A/m² en fonction de la distance par rapport à l'axe de l'empilement en mm dans les plaque bipolaires d'extrémité de l'empilement dans le cas du mode de réalisation de la figure 1, un inducteur 12 coaxial à l'empilement étant présent et un inducteur 16 étant disposé autour d'une des plaques terminales,
- les figures 8A et 8B sont des représentations graphiques de la variation de la densité de courante induite en A/m² dans les plaques bipolaires en fonction de distance par rapport à l'axe de l'empilement en mm pour deux fréquences 200 Hz et 1000 Hz respectivement, les plaques bipolaires étant en matériau composite chargé en graphite ;
- la figure 9 est une représentation graphique de la variation de la densité de courant induite, en A/m² en fonction de la distance par rapport à l'axe de l'empilement en mm dans les plaques bipolaires dans le cas du mode de réalisation de la figure 4,
- les figures 10A à 10C sont des représentations graphiques du profil de température en °C en fonction de la distance par rapport à l'axe de l'empilement en m selon trois stratégies de chauffage différentes pour des plaques bipolaires métalliques et sans circulation de fluide caloporteur,
- les figures 11A et 11B sont des représentations graphiques du profil de température en °C en fonction de la distance par rapport à l'axe de l'empilement en m selon trois stratégies de chauffage différentes, pour des plaques bipolaires métalliques et avec circulation de fluide caloporteur,
- les figures 12A et 12B sont des représentations graphiques du profil de température en °C en fonction de la distance par rapport à l'axe de l'empilement en m pour deux fréquences de la densité de courant, 200 Hz et 1000 Hz respectivement, pour des plaques bipolaires en matériau composite chargé en graphite et sans circulation de fluide caloporteur.

### DESCRIPTION DETAILLEE DE MODES DE REALISATION

La description qui va suivre porte sur une pile à combustible mais l'invention s'applique à tout dispositif électrochimique requérant un chauffage et dont la structure permet l'apparition de courant induit.

En outre, l'invention s'applique à tous les types de pile à combustible et non seulement aux piles de type PEMFC.

Les représentations des inducteurs sont schématiques, ceux-ci sont en général d'un encombrement réduit par rapport aux dessins.

En outre, l'empilement de cellules décrit ci-dessous présente une section transversale carrée, mais ceci n'est en aucun cas limitatif.

L'empilement pourrait par exemple présenter une section de forme polygonale quelconque, une section circulaire ou ovale...

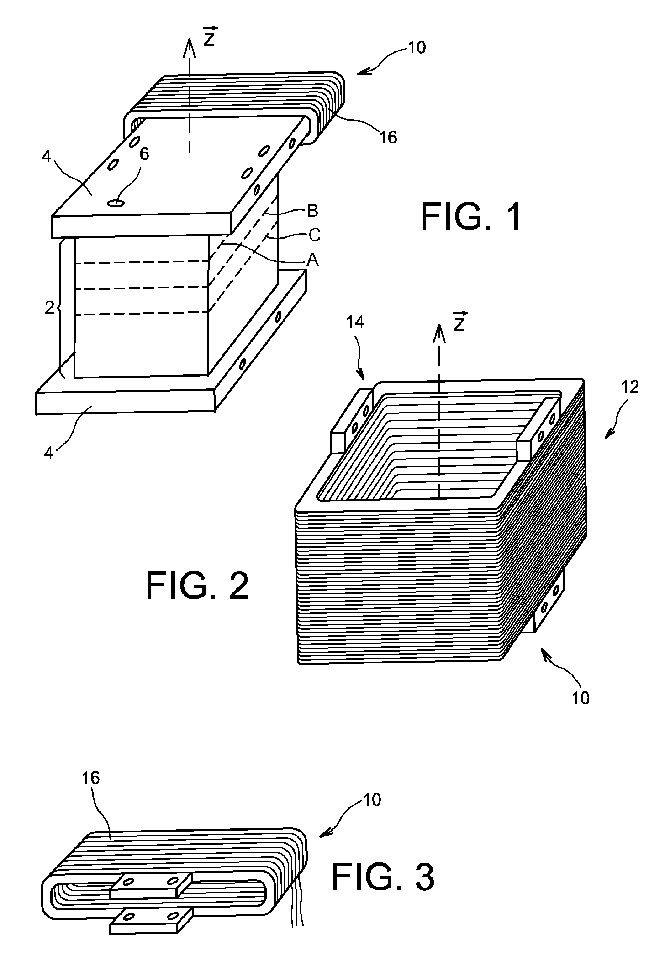

La figure 1 est une représentation schématique en perspective d'un mode de réalisation système électrochimique selon l'invention comportant une pile à combustible comportant un empilement 2 de cellules électrochimiques maintenu entre deux plaques terminales 4. Les plaques terminales sont généralement reliées l'une à l'autre par des tirants (non représentés) assurant un maintien mécanique de l'empilement. En outre, elles comportent des canaux 6 sur la figure 1 pour alimenter l'empilement en gaz réactifs et en fluide caloporteur. Les plaques bipolaires situées aux extrémités de l'empilement sont désignées plaques bipolaires d'extrémité. L'empilement s'étend suivant un axe longitudinal Z. Dans la suite de la description, les plaques bipolaires et les plaques bipolaires d'extrémité ne seront pas toujours distinguées et seront désignées par "plaques bipolaires" sauf si la distinction est utile à la compréhension.

Dans le cas d'une pile PEMFC, chaque cellule comporte une anode et une cathode séparées par une membrane d'échange de protons. Les cellules sont connectées en série par l'intermédiaire de plaques de connexion conductrices électriques disposées entre deux cellules successives, et reliant électriquement l'électrode anodique d'une cellule à l'électrode cathodique d'une cellule suivante. Seules quelques plaques bipolaires sont schématisées.

Les plaques bipolaires assurent donc une connexion électrique en série des cellules. En outre, les plaques bipolaires assurent la distribution et la collecte des gaz dans chacune des cellules. Dans la suite de la description, sont présentés des résultats permettant d'évaluer les performances de l'invention (puissance générée et homogénéité thermique), ces résultats étant obtenus en modélisant le chauffage obtenu dans plusieurs cellules. A des fins de clarté, seuls les résultats obtenus sur trois plaques bipolaires sont utilisés comme illustration (Plaques bipolaires A, B et C).Les plaques bipolaires sont métalliques, par exemple en acier inox, ou en un matériau composite à base de graphite par exemple fabriqué par la société BMCI, plus généralement les plaques bipolaires sont réalisées dans des matériaux sensibles à un champ magnétique appliqué et aptes à la circulation d'un courant induit.

Le système électrochimique comporte également un système de chauffage par induction 10. Dans ce mode de réalisation, le système de chauffage par induction comporte au moins un premier inducteur 12 monté autour de l'empilement de sorte que son axe soit sensiblement confondu avec celui Z de l'empilement.

Pour des raisons de clarté, l'inducteur 12 n'est pas représenté sur la figure 1 et est représenté seul sur la figure 2. L'inducteur s'étend de préférence sur toute la hauteur de l'empilement.

De préférence, la section intérieure du premier inducteur principal 12 est telle qu'elle permet son montage autour de l'empilement muni des plaques terminales. Dans l'exemple présenté, le premier inducteur 12 comporte à chacune de ses extrémités longitudinales des moyens de fixation 14 aux plaques terminales. Dans l'exemple représenté, ces moyens de fixation 14 sont formés par deux saillies opposées munies de perçages venant en regard de perçages réalisés dans les flancs des plaques terminales. Des vis ou d'autres moyens de liaison sont introduits dans ses perçages.

D'autres moyens de fixation sont envisageables, de préférence ceux-ci sont démontables.

Le premier inducteur 12 est destiné à être alimenté par un courant alternatif. Ce courant provoque l'apparition d'un champ magnétique variable dans l'inducteur. Ce champ magnétique variable provoque l'apparition d'un courant induit dans les plaques bipolaires qui sont conductrices électriques. Le courant induit dissipe de la chaleur par effet Joule dans les plaques bipolaires.

La chaleur dissipée dans chaque plaque bipolaire n'est pas uniforme dans toute la section transversale de la plaque bipolaire, l'échauffement global de chaque plaque est alors obtenu par conduction thermique. L'ensemble de l'empilement est échauffé et le coeur de l'empilement atteint une température supérieure à 0°C, l'eau solide passe alors à l'état liquide, les canaux de circulation des gaz sont alors dégagés. La pile est prête à être démarrée. Les moyens de chauffage sont alors désactivés et la pile à combustible est démarrée dans des conditions améliorées évitant sa dégradation.

On obtient simultanément l'échauffement de toutes les plaques bipolaires.

Dans le mode de réalisation représenté, le système de chauffage par induction comporte un deuxième inducteur 16 (représenté seul sur la figure 3) monté autour de la plaque terminale supérieure 4 de sorte que son axe soit perpendiculaire à l'axe de l'empilement. L'inducteur 16 pourrait être monté à proximité de la plaque terminale sans nécessairement l'entourer.

Lors de la génération d'un champ électromagnétique dans le deuxième inducteur un courant induit apparait dans la plaque terminale 4, dans la plaque bipolaire d'extrémité et dans les plaques bipolaires à proximité. Ainsi la plaque bipolaire d'extrémité est également échauffée directement par induction.

Dans ce mode de réalisation, la plaque terminale supérieure 4 est réalisée dans un ou des matériaux sensibles à un champ magnétique appliqué. La plaque terminale inférieure peut également être réalisée dans un ou des matériaux sensibles à un champ magnétique appliqué.

L'ajout de ce deuxième inducteur 16 est particulièrement avantageux. En effet, du fait de la masse thermique importante des plaques terminales 4, l'échauffement par le premier inducteur 12 de la plaque bipolaire d'extrémité peut être moindre que celui des plaques bipolaires qui sont situées au centre de l'empilement. Le deuxième inducteur 16 apporte un échauffement significatif de la plaque bipolaire d'extrémité et assure également un échauffement de la plaque terminale. On obtient alors un échauffement plus homogène de l'empilement.

Dans cet exemple, le deuxième inducteur 16 est fixé sur la plaque terminale supérieure 4 de manière similaire à la fixation de l'inducteur principal sur les plaques terminales.

On peut prévoir de disposer un deuxième inducteur sur la plaque terminale supérieure à l'opposé de l'inducteur représenté sur la figure 1 et/ou un ou deux deuxièmes inducteurs autour de la plaque terminale inférieure.

Un système de chauffage comportant uniquement un ou plusieurs deuxièmes inducteurs 16 situés autour des plaques terminales ne sort pas du cadre de la présente invention.

En variante l'empilement pourrait être composé de plusieurs groupes de cellules, les cellules de chaque groupe étant connectées en série, et les groupes étant connectés en parallèle. En outre, on peut envisager que plusieurs premiers inducteurs 12 alimentés séparément soient superposés pour entourer toute la hauteur. Par exemple, chaque premier inducteur 12 entourant un groupe de cellules connectées en série. Ainsi il serait possible de gérer individuellement le chauffage de chaque empilement. Cette variante est intéressante pour offrir un chauffage plus important au niveau des extrémités où les pertes thermiques sont plus importantes.

Dans ce mode de réalisation, le premier inducteur 12 peut être structuré de sorte à permettre le passage de fils de connexion pour effectuer la mesure de tension dans une ou plusieurs cellules.

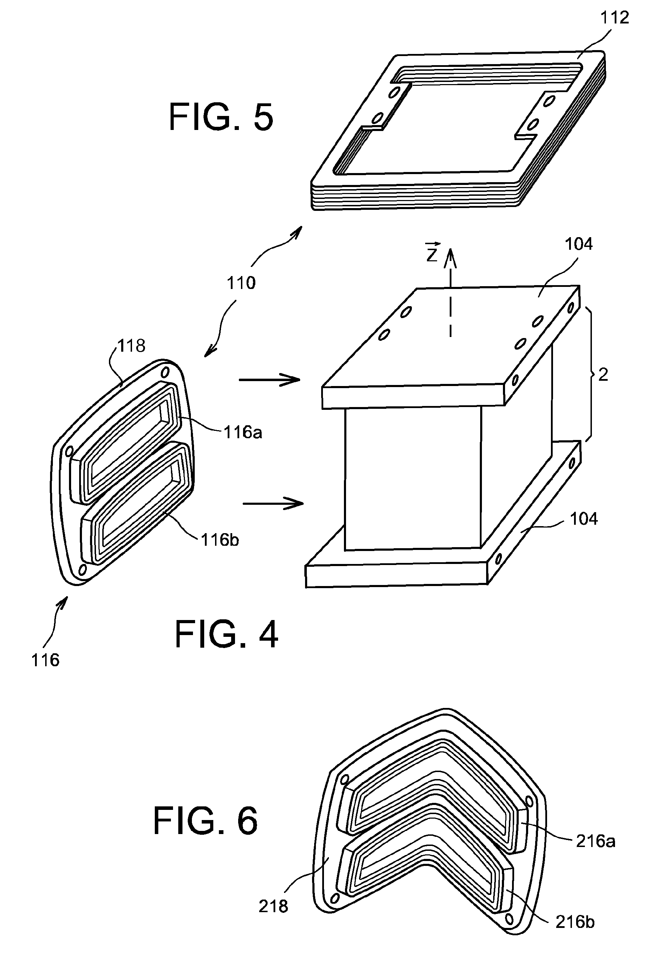

Sur la figure 4, on peut voir un autre mode de réalisation d'un système électrochimique selon l'invention dans lequel le système de chauffage par induction 110 comporte au moins un deuxième inducteur 116 disposé en regard d'une face latérale de l'empilement et dont l'axe est perpendiculaire à l'axe de l'empilement.

De préférence, au moins deux deuxièmes inducteurs sont disposés en regard d'une face latérale de l'empilement. Dans l'exemple représenté, deux deuxièmes inducteurs 116a, 116b sont disposés l'un au dessus de l'autre en regard d'une face latérale de l'empilement et couvrent sensiblement toute sa hauteur. On pourrait envisager plus de deux inducteurs par face de manière à optimiser la répartition de la chaleur générée par induction au sein de l'empilement

Les inducteurs 116a, 116b sont alimentés en courant de sorte que le courant qui circule dans l'inducteur 116a a un sens opposé à celui circulant dans l'inducteur 116b, en d'autres termes le courant circulant dans l'un des inducteurs circulant dans le sens horaire et le courant circulant dans l'autre inducteurs circulant dans le sens antihoraire. Cette circulation de courant impose au champ magnétique généré par l'un des deuxièmes inducteurs de traverser l'autre deuxième inducteur, ce qui permet d'avoir une orientation du champ magnétique qui est sensiblement perpendiculaire aux plaques de l'empilement, des courants plus importants sont alors induits dans l'empilement. En outre, les pertes par induction sont plus homogènes sur la hauteur de l'empilement.

Avantageusement, les inducteurs 116a, 116a sont bobinés dans des sens opposés.

Dans l'exemple représenté, les inducteurs sont montés sur une plaque support 118 fixés sur les plaques terminales 104 par exemple au moyen de vis.

De préférence, un ou plusieurs inducteurs 116 sont prévus en regard de chaque face de l'empilement assurant ainsi un chauffage homogène du contour des plaques bipolaires. On pourrait cependant ne prévoir de ne recouvrir qu'une, deux ou trois faces avec les deuxièmes inducteurs.

Sur la figure 5, on peut voir un autre exemple de paires de deuxièmes inducteurs 216a, 216b. Les deuxièmes inducteurs 216a, 216b sont conformés pour venir en regard de deux faces adjacentes, les deux inducteurs étant donc pliés à angle droit. La plaque support 218 est également pliée à angle droit. En variante, ils pourraient recouvrir trois faces de l'empilement formant ainsi des U. La mise en oeuvre des mêmes inducteurs pour couvrir deux ou trois faces permet d'améliorer sensiblement les rapports entre la puissance thermique générée, la masse et le temps de chauffe. Cette réalisation peut par exemple être très intéressante dans le cas des applications embarquées, car on cherche alors à réduire la masse du système pile à combustible. En variante, on pourrait prévoir plusieurs paires d'inducteurs portés par la même plaque support en formé d'équerre ou de U.

Ce mode de réalisation est de montage aisé et permet de conserver un accès à une ou plusieurs faces de l'empilement. Les opérations de montage et de démontage ainsi que celles de maintenance sont facilitées.

Le fonctionnement de ce mode de réalisation est similaire à celui du mode de réalisation de la figure 1.

Le mode de réalisation de la figure 4 comporte avantageusement au moins un premier inducteur 112 fixé sur la face libre de la plaque terminale supérieure 104, son axe étant sensiblement aligné avec celui de l'empilement. On peut envisager un premier inducteur sur la face libre de la plaque terminale inférieure 104 en plus ou à la place du premier inducteur sur la plaque terminale supérieure. Ces inducteurs provoquent l'apparition de courant induit dans les plaques terminales et les plaques bipolaires d'extrémité et leur échauffement. Ce premier inducteur 112 offre sensiblement les mêmes avantages que ceux liés aux deuxièmes inducteurs 16 de la figure 1.

Un système de chauffage comportant uniquement un ou deux premier inducteur 116 ne sort pas du cadre de la présente invention.

Les performances du chauffage de la pile à combustible peuvent être avantageusement améliorées par exemple par la réduction localisée du périmètre de l'inducteur de manière à augmenter l'induction magnétique, par exemple par la déformation des inducteurs qui perdent leur planéité de manière à augmenter localement l'induction magnétique.

Les inducteurs peuvent être réalisés par des techniques connues Par exemple, les techniques de inducteur puis imprégnation (sous vide) d'un ensemble « support de fixation » et « inducteur » peuvent être utilisées.

Le système de chauffage est alimenté en courant électrique alternatif par exemple à partir de la source électrique destinée au démarrage de la pile à combustible, qui est par exemple formée par une batterie.

De préférence, chaque inducteur est alimenté par l'intermédiaire d'un onduleur dont la fréquence peut être ajustée en fonction du besoin de chaleur nécessaire localement ou globalement par la pile à combustible. On peut envisager d'alimenter plusieurs inducteurs par une alimentation unique ou alors prévoir une alimentation pour chaque inducteur.

Selon un exemple de réalisation, la pile à combustible comporte plusieurs empilements. On peut alors envisager de n'équiper qu'un empilement ou certains des empilements avec le système de chauffage par induction. Seuls l'empilement ou les empilements équipés du système de chauffage est utilisé en vue d'un démarrage à froid. Une fois que cet empilement ou ces empilements sont à température et fonctionnent, la chaleur générée par le fonctionnement des piles est diffusée au fluide caloporteur qui en circulant réchauffe les autres empilements. En outre, l'énergie électrique disponible peut être utilisée pour réchauffer rapidement l'ensemble de la pile.

Le système de chauffage par induction selon l'invention présenté l'avantage de pouvoir être aisément optimisé pour s'adapter aux différentes applications du système pile à combustible, telles que l'application embarquée pour laquelle les critères de masse et de volume sont importants. En outre, il peut être adapté en fonction des cycles typiques d'utilisation, de la quantité d'énergie disponible et également aux conditions environnementales. Enfin, le dimensionnement du système de chauffage sera différent suivant si la pile est destinée à démarrer dans des conditions extrêmes de température, ou en fonction de la durée tolérée pour le maintien en température positive si un tel mode est requis par l'application.

Comme cela a déjà été mentionné ci-dessus, la géométrie du/des inducteurs peut être adaptée. Le positionnement du/des inducteurs permet également d'optimiser son fonctionnement. En effet, plus les inducteurs sont proches de l'empilement, plus le chauffage est efficace (en terme de rendement et de poids de inducteur). Il sera noté qu'une distance minimale est prévue en fonction des normes d'isolation propres à chaque application et de la tenue diélectrique des matériaux isolant utilisés pour assurer l'isolation entre la pile à combustible et les inducteurs.

Le choix de la section du/des inducteurs permet également d'adapter le système de chauffage aux conditions de fonctionnement. Par exemple, plus la section de l'inducteur est grande plus le chauffage peut être rapide, en revanche la masse du système est augmentée.

Le choix de la densité de courant au sein du/des inducteurs permet également d'adapter le système de chauffage aux conditions de fonctionnement. Par exemple, plus la densité de courant est faible, meilleur est le rendement, le rendement étant dans ce cas le rapport de l'énergie transmise à la pile à combustible divisé par l'énergie électrique de la source utilisée, mais le chauffage est plus lent et la masse du système est augmentée.

La fréquence maximale et minimale d'alimentation des inducteurs permet également d'adapter le système de chauffage. Plus la fréquence est élevée, plus la puissance transmise est importante, mais du fait de l'effet de peau au sein des plaques bipolaires au-delà d'une certaine fréquence, la température peut être moins homogène dans l'empilement. Des inducteurs peuvent alors être ajoutés pour compenser cette inhomogénéité, tels que les deuxièmes inducteurs 16 ou les premiers inducteurs 112.

Le système de chauffage selon l'invention présente également l'avantage d'être utilisable dans plusieurs modes de fonctionnement de la pile.

Il permet un maintien à température positive de la pile à combustible à l'aide d'un chauffage de faible puissance.

Il peut également assurer un chauffage « à vitesse modéré » de la pile à combustible mais avec une grande efficacité énergétique, sans circulation du liquide fluide caloporteur.

Il peut également assurer un chauffage « rapide » du système mais au détriment de l'efficacité énergétique en faisant circuler du liquide fluide caloporteur).

Pour certaines géométries de canaux et de plaques bipolaires, le système de chauffage peut garantir que certains des canaux de distribution de gaz carburants, comburants et la zone de la membrane à proximité seront à température positive ceci même si le coeur de pile est encore à température négative. Dans ce cas, il est possible de considérer un démarrage de la pile à faible courant dans la mesure où celui-ci se répartira naturellement dans les zones à température positive. Ce démarrage de la pile à combustible à faible courant permet d'accélérer significativement la montée en température de la pile, de diminuer la quantité d'énergie électrique nécessaire au démarrage, tout en garantissant des conditions de démarrage qui ne risquent pas de dégrader la pile à combustible.

Le système de chauffage par induction selon l'invention est peu consommateur d'énergie puisque seules les plaques bipolaires sont chauffées. Il en résulte un chauffage efficace par conduction thermique des membranes et des canaux de distribution de la pile à combustible. Les zones du circuit fluidique fluide caloporteur sont également chauffées de manière locale par conduction thermique. On peut noter que, puisque la circulation du fluide caloporteur n'est pas requise pour réchauffer l'empilement, la chaleur générée par le système de chauffage n'est pas évacuée au sein du circuit de refroidissement par circulation du fluide caloporteur entre l'intérieur et l'extérieur de l'empilement. Il en résulte un chauffage plus efficace par rapport à des systèmes utilisant la circulation du fluide caloporteur.

De manière très avantageuse, le chauffage par induction mis en oeuvre par l'invention ne génère pas d'effets indésirables sur la pile à combustible et sur son vieillissement. L'onde électromagnétique générée a une interaction minimale avec la membrane de la pile. D'autre part, aucune différence de potentiel électrique n'est appliquée entre deux plaques bipolaires successives. Il n'y a donc pas de risque que le procédé par induction ne contribue au vieillissement prématuré de la pile à combustible.

En outre, le système de chauffage par induction est destiné à être activé lorsque la pile n'est pas en fonctionnement. Ainsi, les capteurs pouvant être utilisés et les informations transmises aux actionneurs ne sont pas actifs lors de l'émission des ondes électromagnétiques. Le risque de perturbation induit par l'onde électromagnétique induite est donc nul pour la majorité des signaux. Pour les signaux utilisés pendant la phase de chauffage et sensibles aux perturbations électromagnétiques, des moyens connus de l'homme de métier sont mis en oeuvre pour annuler l'impact de ces perturbations, (respect d'une distance d'éloignement donné, la présence d'un blindage...).

En outre, le champ électromagnétique qui génère des pertes au sein de la pile à combustible peut éventuellement générer aussi des pertes dans d'autres conducteurs électriques présents au voisinage du système. Mais le champ électromagnétique s'atténue très rapidement avec l'éloignement et les pertes générées au sein de bons conducteurs, tels que le cuivre ou l'aluminium, sont nettement plus faibles que celles générées au sein des plaques bipolaires.

Ainsi l'échauffement que peuvent connaître les éléments voisins est relativement faible. En outre, on peut avantageusement modifier la géométrie des inducteurs et/ou ajouter un ou des éléments canalisant le flux magnétique (ferrites, acier, fonte...) pour canaliser le flux magnétique hors des zones sensibles afin de réduire un éventuel échauffement excessif d'un ou plusieurs éléments voisins.

Selon l'invention, le volume à chauffer est limité. La mise en mode opérationnel de la pile à combustible à partir d'une température ambiante négative peut être plus rapide que dans des piles utilisant le circuit de refroidissement et nécessiter moins d'énergie.

Le système de chauffage par induction présente également l'avantage que la puissance thermique générée au sein de l'empilement est facilement ajustable. Celle-ci peut par exemple être ajustée en modifiant la fréquence de l'onde électrique transmise aux inducteurs.

Le système de chauffage par induction permet d'éviter un démarrage de la pile à combustible dans des conditions de gel avec des performances de pile dégradées. Ce mode de démarrage, bien que possible peut être cause d'un vieillissement prématuré des éléments constitutifs de la pile à combustible.

Le système de chauffage par induction selon l'invention peut être très facilement adapté aux piles à combustibles existantes, il n'a pas d'impact sur le reste du dimensionnement du système pile à combustible.

En outre, le système de chauffage ne requiert pas de contact physique avec l'empilement. En effet, compte tenu des puissances thermiques à générer pour réchauffer la pile à combustible, une distance minimale d'isolation électrique entre les inducteurs et la pile à combustible peut aisément être fixée. Ainsi il n'y a pas de risque de mise en court-circuit de plusieurs plaques bipolaires de l'empilement ni de risque de défaut électrique entre l'empilement et les bobinages inducteurs.

En outre, le système de chauffage permet d'adapter très facilement la répartition des puissances au sein de l'empilement, par exemple il peut être souhaité de transmettre plus de puissance calorifique aux extrémités de celui-ci. Cette répartition peut être obtenue en adaptant la géométrie des inducteurs ou par l'ajout d'inducteurs proches des extrémités de la pile à combustible, par exemple au moyen des inducteurs 16 ou 112 ou encore en ajustant la fréquence d'alimentation au sein de certains bobinages inducteurs.

Des éléments en matériau magnétique peuvent être ajoutés de manière à canaliser les lignes de champ et donc pouvoir modifier de manière plus aisée la répartition des pertes au sein de l'empilement.

Le système de chauffage selon l'invention est en outre compatible avec les différentes technologies de plaques bipolaires pouvant être utilisées dans les piles à combustibles. Par exemple dans le cas d'une pile PEMFC, les plaques bipolaires peuvent être en composite graphite ou en acier inoxydable.

La conception et le dimensionnement d'un système de chauffage par induction directe selon l'invention peuvent être réalisés avec la méthodologie suivante utilisée à titre d'exemple :
- une étape d'identification des paramètres du cahier des charge « système » requis pour le dimensionnement du dispositif de chauffage (température ambiante minimale, durée de l'arrêt système (de manière à définir la stratégie de gestion de type « maintien en température » ou « chauffage à partir de la température ambiante, durée maximale tolérée pour que le système soit fonctionnel, poids toléré pour le système de chauffage ...),
- une étape d'identification de la géométrie et des dimensions des différents composants utilisés dans l'assemblage Pile à combustible
- une étape d'identification des matériaux utilisés dans l'assemblage Pile à combustible, et des spécifications physiques (électromagnétiques et thermiques) des matériaux utilisés (résistivité électrique, perméabilité magnétique, conductivité thermique, capacité calorifique...),
- une étape d'incorporation des différents paramètres cités (géométriques, matériaux, température initiale) dans un ou plusieurs logiciel de simulation numérique. Des simulations de deux types sont à réaliser, d'une part des simulations de nature électromagnétique (phénomène d'induction - résolution des équations de Maxwell) et des simulations de nature thermique. Pour effectuer ces simulations, des logiciels multi dimensionnels (2D ou bien mieux 3D), par exemple des logiciels dits « à éléments finis » ou des logiciels dits « à différences finies » peuvent être utilisés.

Les deux types de simulations réalisées pourront être réalisés directement à l'aide de logiciels dits « couplés » (par exemple COMSOL Multiphysics) ou indépendants (exemples de logiciels utilisables : ANSYS Maxwell, Flux3D, Matlab...).
- Une étape d'initiation d'un processus itératif (manuel ou automatique) de dimensionnement optimum du système de chauffage par induction de manière à répondre au mieux au cahier des charges :
   o Choix des matériaux utilisés pour le(s) bobinage(s) inducteur(s),
   o Choix de la géométrie du/des bobinage(s) inducteur(s) (prise en compte de l'intégration au sein du système, de paramètre tels que la tenue diélectrique requise entre le bobinage inducteur et la pile à combustible, des procédé de fabrications envisagés pour la réalisation des bobinages inducteurs, des contraintes de montage...),
   o Choix des spécifications électriques du système de chauffage (densité de courant dans le(s) bobinage(s) inducteur(s), fréquence des courants, tension d'alimentation,
- une étape de validation éventuelle du dimensionnement par la réalisation de prototypes instrumentés ».

En outre, le système de chauffage est très intéressant du point du vue de son intégration. En effet, le volume occupé par les inducteurs est localisé dans un volume qui serait en grande partie peu valorisable pour y installer d'autres éléments du système. De plus le système de chauffage met en oeuvre, comme éléments supplémentaires, uniquement des inducteurs dont la masse est relativement faible et un onduleur de faible volume. De plus, la transmission de la chaleur n'utilise pas de moyen intermédiaire, contrairement aux réchauffeurs à gaz ou électriques externe. Les pertes thermiques sont de ce fait réduites. Rappelons que la masse et volume des réchauffeurs à gaz ou électriques externes peuvent être significatifs par rapport à la seule pile à combustible.

Par ailleurs, le système de chauffage n'interagit pas avec les procédures de gestion des gaz spécifiques de la pile à combustible. Son fonctionnement ne perturbe donc pas les protocoles d'arrêt démarrage sensibles de l'état de l'art. En outre, l'efficacité du système de chauffage est indépendante de l'état d'humidité (quantité et homogénéité) de la pile durant la phase d'arrêt.

A titre d'exemples non limitatifs, des exemples de caractéristiques du système de chauffage sont maintenant donnés. Ces exemples permettent d'évaluer l'influence des différents paramètres (technologie ; cahier des charge système ; stratégie de gestion ; densité de courant maximal au sein des bobinages inducteurs). Rappelons que dans le cas d'un système constitué de N empilements « piles à combustible » dont un seul serait utilisé au démarrage, la masse évaluée ci-dessous est mutualisé pour les N systèmes considérés.

Dans le cas d'un système de chauffage destiné à assurer un chauffage « à vitesse modérée» de la pile à combustible mais avec une grande efficacité énergétique et/ou à assurer un chauffage « rapide » du système, et pour une pile de forte puissance constitué de plaques bipolaires métalliques, un premier inducteur 12 peut avoir les caractéristiques suivantes :

Selon un premier exemple, dans le cas d'une alimentation de l'inducteur à une fréquence de 400Hz :
- hors maintien mécanique, l'inducteur en cuivre a un volume d'environ 2dm³ de cuivre soit une masse de 18 kg de cuivre. Pour un inducteur d'alliage d'aluminium, la quantité de métal nécessaire s'élève à 3,3dm³ puisque la densité de courant est abaissée à 3A/mm² mais la masse est de 9kg,
- la puissance de chauffe directe au sein de la pile est estimée à 8400 W (à 400Hz),
- les pertes joules au sein de l'inducteur sont alors estimées à environ 800 W en considérant l'utilisation de fil adapté évitant l'effet de peau.

Dans le cas d'une fréquence d'alimentation de l'inducteur de 900Hz :
- hors maintien mécanique, l'inducteur en cuivre a un volume d'environ 1,6 dm³, soit 14,4 kg de cuivre. Dans le cas d'un inducteur en cuivre, le volume est de 2,6 dm³, soit 7,2 kg d'aluminium,
- la puissance de chauffe directe au sein de la pile est estimée à 8400 W (à 900Hz),
- les pertes joules au sein de l'inducteur sont plus faibles et estimées à environ 560 W en considérant l'utilisation de fil adapté évitant l'effet de peau.

Dans l'exemple à 900 Hz, un effet de peau un peu plus important au sein du matériau de la pile à combustible peut apparaitre. Il en résulte une hétérogénéité des pertes un peu plus importante au sein des plaques bipolaires.

Pour le mode de réalisation de la figure 4, les caractéristiques des inducteurs sont les suivantes :
- hors maintien mécanique, les deux premiers inducteurs 112 coaxiaux principaux ont une section de conducteur cuivre de 420 mm² et les huit inducteurs latéraux 116a, 116b ont une section de 100 mm², l'ensemble étant alimenté par un courant à une fréquence de 600Hz. Ce dimensionnement correspond à un volume de 1 dm³ de cuivre soit 9 kg de cuivre ou 1,7 dm³ soit 4,5 kg d'aluminium.

Dans le cas d'un système de chauffage destiné à assurer un maintien à température positive de la pile à combustible à l'aide d'un chauffage de faible puissance. Une puissance dissipée de 1W par plaque bipolaire métallique est considérée suffisante pour maintenir la pile à combustible à température positive lorsque la température ambiante est de -20°C.

Le système de chauffage dimensionné ci-dessus avec 7,2 kg d'aluminium, les pertes au sein de l'inducteur 12 sont alors estimées à 30W. Cette grandeur est à comparer à la puissance utile dissipée directement au sein des plaques bipolaires qui est de 280W. Avec un rendement faible pour l'onduleur d'alimentation de l'inducteur de 80%, on obtient donc un rendement global du système de maintien en température (puissance utile pour maintenir la pile en température / puissance électrique utilisée) de 72%.

A titre de comparaison, la solution de l'état de la technique consistant à chauffer de manière déportée le liquide fluide caloporteur nécessiterait une puissance totale supérieure à 550W (puissance calorifique nécessaire au maintien en température de la pile et du circuit liquide fluide caloporteur ainsi que la puissance nécessaire au fonctionnement de la pompe de circulation). On arrive donc dans ce cas moins favorable à un rendement global du système de maintien en température de 50%.

Grâce à l'invention, le rendement global du système de maintien en température est augmenté de manière sensible.

Des simulations numériques vont maintenant être présentées illustrant les performances du système de chauffage selon l'invention« L'objectif de ces simulation est de valider quantitativement le concept proposé. De manière à réduire le temps de simulation, des modèles plus simples que ceux 3D décrits précédemment et utilisables par l'homme de métier ont été utilisés. Les simulations de type électromagnétiques présentées sont de type 2D-axysimétrique et les simulations de type thermique sont de type 1D et ont été obtenues à partir de Matlab.

Pour ces simulations, on considère un empilement à section circulaire. En outre, n'ont été pris en compte que les éléments actifs et réactifs. D'un point de vue électromagnétique, uniquement les bobinages inducteurs, les plaques bipolaires, et les amenées de courant ont été prises en compte (les membranes et le liquide de refroidissement, par exemple de l'eau désionisée, n'ont pas été considérées car leur effet est négligeable d'un point de vue électromagnétique).

Tout d'abord des simulations portant sur la densité de courant induit dans les plaques bipolaires sont présentées. Il est rappelé que la chaleur produite par effet Joule est proportionnelle à la densité de courant induit.

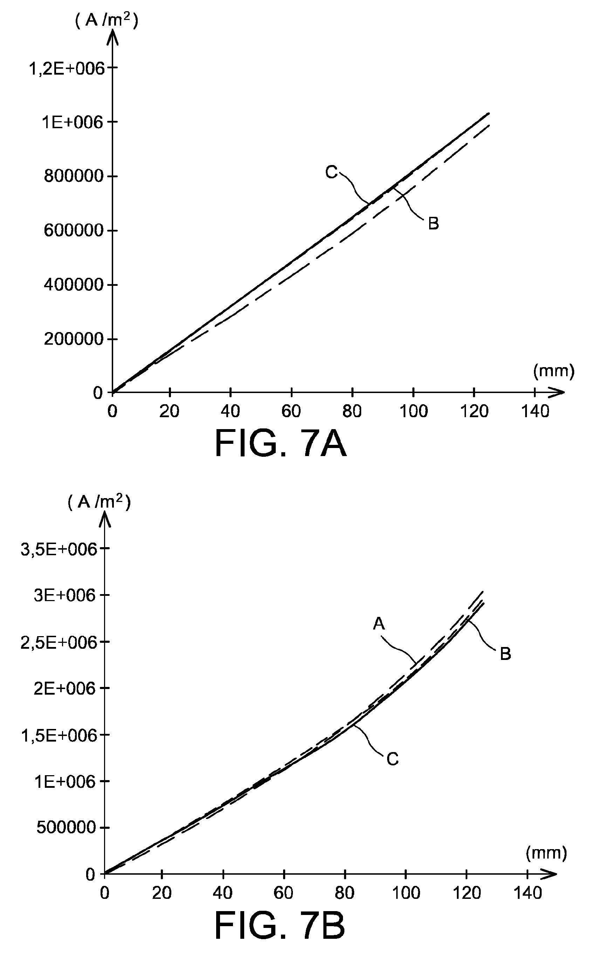

Les figures 7A à 7C représentent la variation de la densité de courant induit en A/m² au sein de trois plaques bipolaires désignées A, B et C métalliques (figure 1) en fonction de la distance par rapport à l'axe de l'empilement en mm pour le mode de réalisation de la figure 1 ne comportant que le premier inducteur. La pile considérée a une puissance d'environ 30kW.

L'empilement a une hauteur de 350 mm ce qui correspond à environ 280 cellules. La surface des plaques bipolaires est d'environ 500 cm² en considérant la zone active et la zone de joints et de gestion de la fluidique, ce qui correspond à une distance à l'axe moyenne de 125 mm.

Par exemple, l'ordre de grandeur de l'épaisseur des plaques bipolaires est de 1 mm pour les matériaux aciers inoxydable et de 5 mm pour les matériaux composites.

Le premier inducteur est supposé être un cylindre de hauteur 420 mm et de distance à l'axe moyen de 158 mm avec une épaisseur de 2 mm.

La plaque bipolaire A est une plaque bipolaire d'extrémité, la plaque bipolaire C est une plaque bipolaire médiane, i.e. située sensiblement au centre de l'empilement et la plaque bipolaire B est une plaque bipolaire intermédiaire, située à mi-chemin entre la plaque bipolaire A et la plaque bipolaire C.

Pour la figure 7A, la densité de courant circulant dans l'inducteur est des 5A/mm² à une fréquence de 100 Hz.

Pour la figure 7B, la densité de courant circulant dans l'inducteur est des 5A/mm² à une fréquence de 400 Hz.

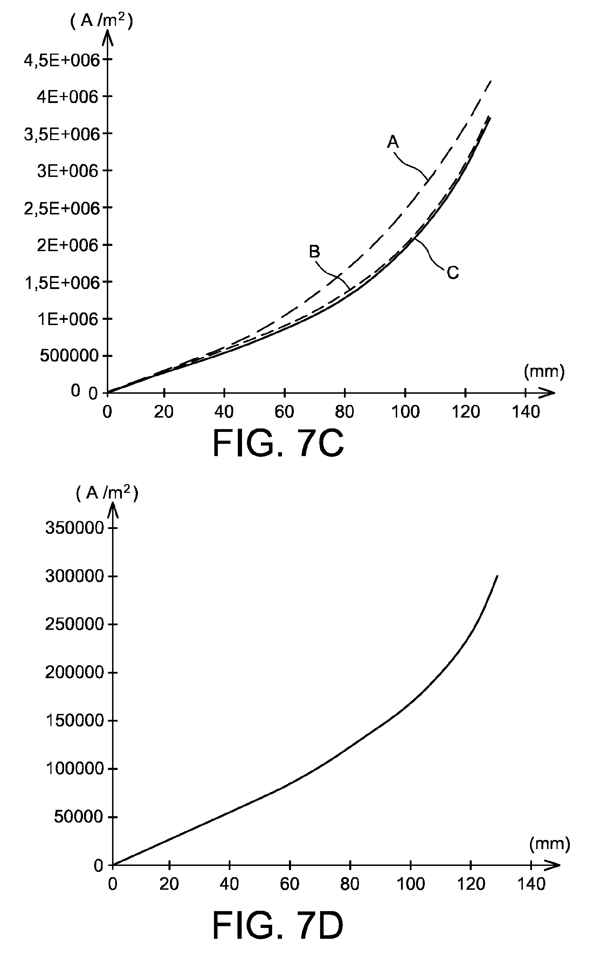

Pour la figure 7C, la densité de courant circulant dans l'inducteur est des 4A/mm² à une fréquence de 900 Hz.

Tout d'abord, on observe un échauffement sensiblement homogène des plaques bipolaires. On constate que cette homogénéité est moindre lorsque la fréquence augmente. En effet, on observe en outre l'apparition d'un effet de peau dès 400 Hz. Dans tous les cas, les pertes induites étant directement proportionnelles au carré de la densité de courant induite, la chaleur générée par induction au sein des plaques bipolaires est plus importante à la périphérie des plaques bipolaires. La diffusion thermique au sein des plaques bipolaires est donc prise en compte pour évaluer le profil de température au sein des plaques bipolaires.

En outre, on constate tout d'abord que la fréquence requise pour obtenir un échauffement est faible, moins de quelques kHz. Il est rappelé, que l'on souhaite augmenter la fréquence de manière à diminuer la taille de l'inducteur. Il est tenu compte de l'effet de peau au sein des plaques bipolaires et la diffusion thermique au sein de celles-ci mentionnés ci-dessus pour identifier la fréquence maximale acceptable. Il est à noter qu'une fréquence élevée n'est pas gênante tant au niveau du/des onduleurs que du/des inducteur, puisque qu'il y a peu d'effet de peau au sein de bons conducteurs tels que le cuivre ou l'aluminium.

Sur la figure 7D, on peut voir représentée la variation de la densité de courant induit en A/m² au sein d'une plaque bipolaire d'extrémité A métallique de l'empilement considéré pour la simulation des figures 7A à 7C, celui-ci comportant en outre un deuxième inducteur 16 autour de la plaque terminale supérieure comme représenté sur la figure 1. La densité de courant traversant les inducteurs est 5A/mm² à une fréquence de 100 Hz.

On constate que l'ajout de ce second inducteur permet, à une même fréquence de 100Hz, d'augmenter la densité de courant induit de 20 % et donc les pertes par induction de 40% au sein des plaques bipolaires situées en extrémité de l'empilement.

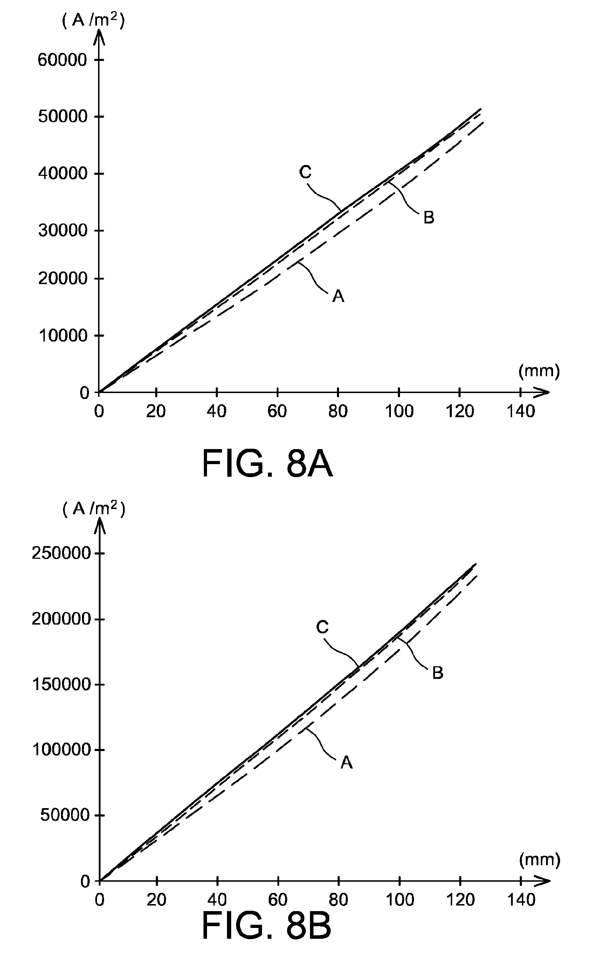

Sur la figures 8A et 8B, les simulations sont réalisées en considérant le même empilement que pour les simulations des figures 7A à 7C, mais les plaques bipolaires sont en matériau composite chargé en graphite. Avec de telles plaques bipolaires, la puissance de la pile est de 5 kW.

La densité de courant dans l'inducteur est de 5 A/mm²avec une fréquence de 200 Hz et 1000 Hz respectivement pour les figures 8A et 8B.

On constate que les densités de courant induites sont plus faibles et que l'effet de peau n'apparaît pas pour des fréquences d'alimentation inférieures au kilohertz. Mais, compte tenu de la résistivité à coeur plus importante de ces matériaux composites, qui est au moins plusieurs dizaines de fois plus grande que celle de l'acier inox, les pertes générées par induction sont plus importantes à même fréquence.

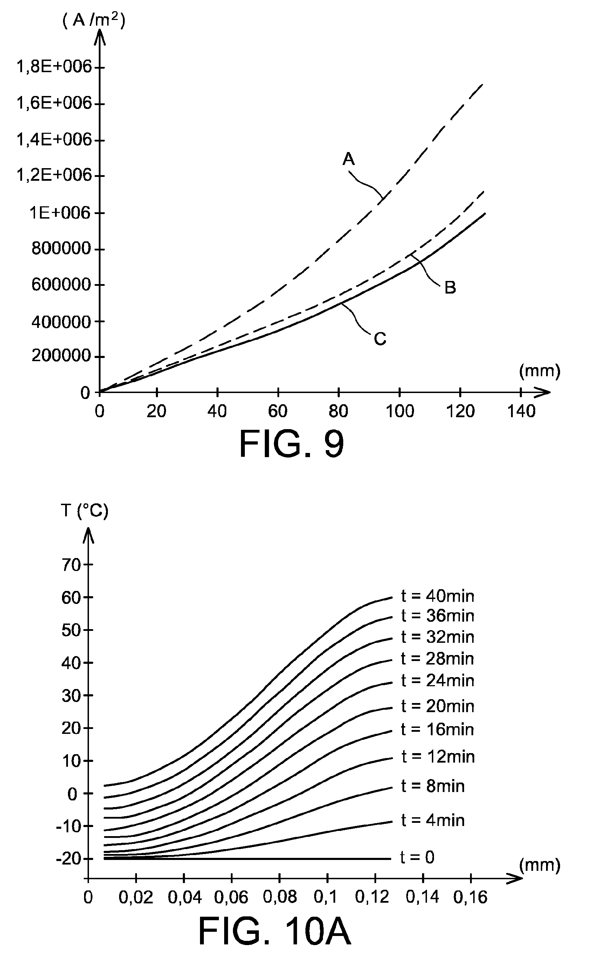

La figure 9, représente la variation de la densité de courant induit en A/m² en fonction de la distance à l'axe de l'empilement en mm pour le mode de réalisation de la figure 4, le système de chauffage comportant quatre paire de deuxièmes inducteurs latéraux de section utile de 100 mm² et un inducteur de section utile de 420 mm² à chaque extrémité de l'empilement.

On constate que la plaque bipolaire d'extrémité A a un échauffement plus important du fait de la présence des inducteurs aux extrémités de l'empilement.

Des simulations montrant la température au sein de l'empilement vont maintenant être présentées.

Les simulations effectuées font également l'hypothèse d'une géométrie axisymétrique.

Nous considérons le cas de la pile à combustible PEMFC métallique dont les caractéristiques dimensionnelles ont déjà été présentées ci-dessus. La capacité calorifique moyenne des plaques bipolaires et du liquide fluide caloporteur au sein des plaques bipolaire à été prise en compte dans ces simulations. De manière à simplifier la simulation du mécanisme de diffusion thermique, la géométrie des canaux de fluide caloporteur a été simplifiée dans la pré-étude réalisée, en utilisant un modèle « moyen » connu de l'homme du métier. Les plaques bipolaires sont formées de canaux répartis de manière régulière dans la section des plaques bipolaires. Si ces canaux sont d'épaisseur « e », de largeur « L » et que la distance entre deux canaux successifs vaut « d », le modèle moyen thermique consiste à approximer la plaque bipolaire par un canal unique de largeur celle de la plaque bipolaire et d'épaisseur : « e*L / (L+d).

La température initiale de l'empilement considérée égale à -20°C.

La géométrie de l'inducteur prise en compte est celle de la figure 1 avec un seul inducteur 12, sachant que les résultats de simulation électromagnétique exposés ci-dessus ont montré que les courants induits dans les deux géométries peuvent être très proches.

Les figures 10A à 10C représente le profil de température en °C en fonction de la distance par rapport à l'axe de l'empilement en m.

Chaque courbe représente le profil de température dans une plaque bipolaire le long de son diamètre à un instant donné. Par exemple sur la figure 10A, sont représentés les profils de température pris toutes les 4 min, du temps 0 min au temps 40 min. Le profil à 0 min étant la courbe du bas (température dans toute la plaque bipolaire à -20°C), et le profil à 40 min étant la courbe la plus en haut (température au centre de la plaque légèrement supérieure à 0°C et température au niveau du bord extérieur de la plaque presque 60°C).

On considère que l'empilement est intégralement réchauffé lorsque la température de l'empilement au niveau de son axe est supérieure à 0°C assurant que l'eau soit à l'état liquide

Pour la figure 10A, le générateur de courant a une fréquence unique de 100 Hz. Le temps pour réchauffer l'empilement intégralement est 40 min.

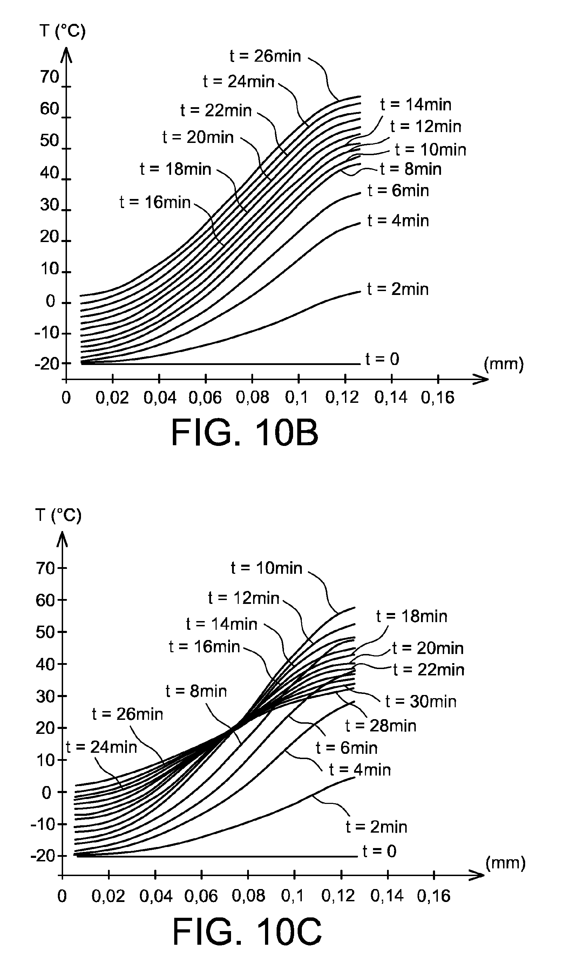

Pour la figure 10B, le générateur de courant a une fréquence variable. La fréquence est de 200 Hz de 0 à 4 min, de 150 Hz de 4 min à 8 min et 100 Hz de 8 min à 26 min. Le temps pour réchauffer l'empilement intégralement est 26 mn. Une alimentation à fréquence variable permet de réduire le temps de chauffe.

Pour la figure 10C, le générateur de courant a une fréquence variable. La fréquence est de 200 Hz de 0 à 4 min et de 150 Hz de 4 min à 10 min.
Le temps pour réchauffer l'empilement intégralement est 30 mn, mais avec un temps de chauffe de 10 min. Avec cette stratégie de chauffage, un gradient thermique très important est rapidement obtenu, le temps pour obtenir un réchauffement intégral de l'empilement est plus long que pour la stratégie de la figure 10B, mais cette stratégie est meilleure en terme d'efficacité puisque le système de chauffage n'est utilisé que pendant les 10 premières minutes. Les 20 minutes suivantes servent à l'homogénéisation de la température au sein de l'empilement par diffusion thermique.

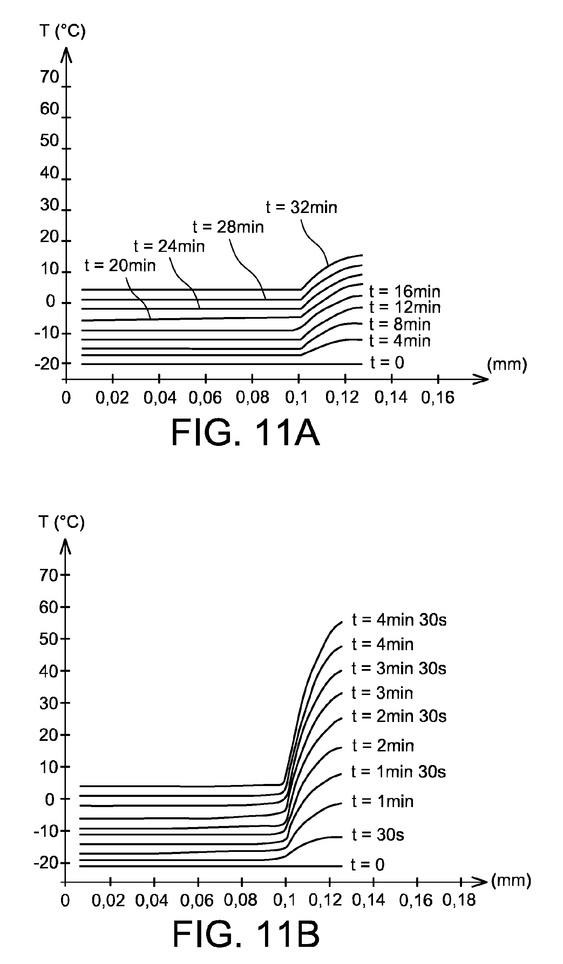

Les figures 11A et 11C représentent les profils de température au sein de l'empilement dans le cas où le fluide caloporteur est en circulation.

Il est supposé que la température du coeur de pile (à l'exception de la zone externe comprise entre un rayon R de 10cm et 12.5cm) est à température homogène ceci grâce à a circulation du fluide caloporteur. Les résultats présentés sont obtenus en supposant que le volume de fluide à l'extérieur de la pile et qui doit être réchauffé correspond à 80% du volume de fluide au sein de la pile à combustible.

Pour la figure 11A, la fréquence du courant d'alimentation est de 100 Hz.

Pour la figure 11B, la fréquence du courant d'alimentation est de 400 Hz.

Dans ces conditions, et même si la quantité de liquide fluide caloporteur à réchauffer est plus importante, le chauffage est plus rapide que dans le cas sans circulation de liquide fluide caloporteur, la durée de chauffage est à 100Hz, de 40 minutes sans circulation de liquide fluide caloporteur, alors qu'elle est de 28 minutes avec circulation du liquide fluide caloporteur. De plus, grâce à l'homogénéité de température obtenue du fait de la circulation du fluide caloporteur, il est possible d'envisager une fréquence plus élevée pour l'alimentation des inducteurs. Dans le cas de la géométrie prise en compte, le temps pour réchauffer intégralement la pile devient inférieur à 4 minutes à la fréquence de 400 Hz. Sur cette figure, nous observons que la température n'est pas homogène dans les plaques de rayon supérieur à 10cm. Cela provient du modèle simulé qui représente une géométrie de plaque bipolaire dans laquelle la surface radialement externe de la plaque bipolaire n'est équipée ni de canaux de liquide fluide caloporteur, ce qui implique que dans une zone radiale externe au-delà d'un rayon de 10cm, la température ne soit pas homogène.

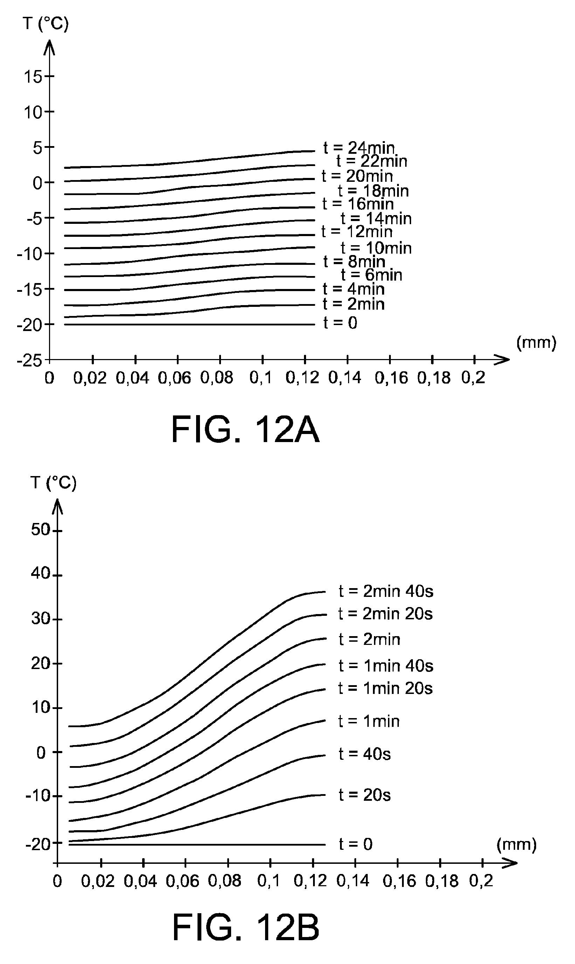

Les figures 12A et 12B représentent le profil de température en fonction de la distance par rapport à l'axe de l'empilement en mètre en considérant des plaques bipolaires en matériau composite contenant du graphite.

Pour la figure 12A, la fréquence du courant d'alimentation est de 200 Hz.

Pour la figure 12B, la fréquence du courant d'alimentation est de 1000 Hz.

Compte tenue de la conduction thermique des matériaux composites et de l'épaisseur des plaques bipolaires, pour une fréquence d'alimentation de 1000 Hz, le temps de chauffe est inférieur à 2 min et 20 s, mais on observe un fort gradient thermique.

Ces simulations montrent l'efficacité du système de chauffage à induction selon l'invention, et en particulier dans le cas d'une fréquence du courant d'alimentation élevée et lorsque le fluide caloporteur circule, on obtient un temps de chauffe très court et un chauffage relativement homogène.

Les puissances calorifiques générées au sein des plaques bipolaires au sein de l'empilement sont compatibles avec l'application recherchée voir supérieures au besoin pour des fréquences de l'ordre de 100 Hz à 10kHz. De telles puissances permettent de réchauffer rapidement complètement ou partiellement les zones actives de la pile à combustible avant un démarrage.

La puissance dissipée au sein de l'empilement peut directement être pilotée grâce à la fréquence d'alimentation des inducteurs. Comme indiqué ci-dessus, le système de chauffage peut à la fois permettre le maintien à température positive pour les arrêts de courte durée ou le chauffage rapide de la pile à combustible pour un démarrage à froid à partir d'une température négative.

Le système de pile à combustible et de système de chauffage peut par exemple être utilisé comme moyen de traction électrique dans un véhicule automobile, ou comme station de stockage d'énergie dédiée aux réseaux de distribution électrique.

## Revendications

1. Système électrochimique comportant au moins un dispositif électrochimique comprenant un empilement de cellules électrochimiques connectées électriquement entre elles par des plaques bipolaires interposées entre deux cellules électrochimiques successives de l'empilement, ledit empilement étant disposé entre deux plaques terminales (4, 104), ledit empilement s'étendant suivant un axe (Z), ledit système électrochimique comportant des moyens d'alimentation des cellules en fluide réactifs, des moyens de circulation d'un fluide caloporteur à travers l'empilement et au moins un système de chauffage par induction comportant au moins une paire d'inducteurs (116a, 116b, 216a, 216b), dits deuxièmes inducteurs, dont l'axe est sensiblement perpendiculaire à l'axe de l'empilement, lesdits deuxièmes inducteurs étant destinés à provoquer l'apparition d'un courant induit dans au moins une plaque bipolaire, générant l'échauffement de ladite plaque bipolaire par effet Joule. Ladite paire de deuxièmes inducteurs étant disposé en regard d'au moins une même face latérale, chaque deuxième inducteur (116a, 116b, 216a, 216b) de ladite paire étant alimenté en courant de sorte que le courant circulant dans l'un des deuxièmes inducteurs de la paire circule dans un sens opposé à celui-ci circulant dans l'autre des deuxièmes inducteurs de la paire.

2. Système électrochimique selon la revendication 1, dans lequel l'empilement a une section transversale polygonale, les deuxièmes inducteurs (216a, 216b) étant conformés pour être en regard d'au moins deux faces latérales.

3. Système électrochimique selon la revendication 1, dans lequel le système de chauffage par induction comporte également au moins un autre inducteur (12, 112), dit premier inducteur, dont l'axe est coaxial à l'empilement.

4. Système électrochimique selon la revendication 3, dans lequel le premier inducteur (12) est disposé autour de l'empilement de manière sensiblement coaxiale à l'empilement

5. Système électrochimique selon la revendication 4, dans lequel le premier inducteur (12) s'étend sur toute la hauteur de l'empilement.

6. Système électrochimique selon l'une des revendications 1 à 5, dans lequel I les inducteurs sont montés sur une plaque support (118) fixée sur au moins une plaque terminale (104).

7. Système électrochimique selon l'une des revendications 1 à 6, dans lequel le système de chauffage par induction comporte également au moins un inducteur (16) disposé autour ou à proximité d'une plaque terminale (4).

8. Système électrochimique selon l'une des revendications 3 à 7 en combinaison avec la revendication 3, 4 ou 5, dans lequel le premier inducteur (112) est monté sur au moins une plaque terminale (104) sur sa face opposée à celle orientée vers l'empilement.

9. Système électrochimique selon l'une des revendications 1 à 8, comportant une source d'alimentation en courant alternatif et un onduleur.

10. Système électrochimique selon l'une des revendications 1 à 9, dans lequel le dispositif électrochimique comportant plusieurs empilements, ledit système de chauffage échauffant au moins un empilement.

11. Système électrochimique selon l'une des revendications 1 à 10, dans lequel le dispositif électrochimique est une pile à combustible, par exemple de type PEMFC.

12. Procédé de fonctionnement du système électrochimique selon l'une des revendications 1 à 11, comportant les étapes:
- activation du système de chauffage par induction en dehors d'une phase de fonctionnement du dispositif électrochimique,
- échauffement de l'empilement par génération d'un courant induit dans au moins une plaque de connexion,
- arrêt du système de chauffage,
- démarrage du dispositif électrochimique.

13. Procédé de fonctionnement du système électrochimique selon la revendication 12, dans lequel le système de chauffage est activé après une phase d'arrêt prolongé du dispositif électrochimique et dans lequel le système de chauffage est arrêté lorsque la température au sein de l'empilement est supérieure à la température de fusion de l'eau au sein du générateur électrochimique et/ou dans lequel le système de chauffage est activé lors d'un arrêt de courte durée du dispositif électrochimique de sorte à maintenir en température l'empilement du dispositif électrochimique.

14. Procédé de fonctionnement selon l'une des revendications 12 ou 13, dans lequel le courant alternatif présente une fréquence variable.

15. Procédé de fonctionnement selon l'une des revendications 12 à 14, dans lequel une circulation de fluide caloporteur a lieu pendant la phase de chauffage.
